# EUROPEAN PATENT SPECIFICATION

(11) **EP 2 767 323 B1**
(45) Date of publication and mention of the grant of the patent: **08.12.2021**
(21) Application number: 14154014.6
(22) Date of filing: 05.02.2014
(51) Int. Cl.: B01D 53/04, B01D 53/26, B01D 53/62, H05B 6/46

(54) **System and method for collecting carbon dioxide utilizing dielectric heating**
System und Verfahren zum Sammeln von Kohlendioxid unter Verwendung einer dielektrischen Heizung
Système et procédé de collecte de dioxyde de carbone en utilisant un chauffage diélectrique

(30) Priority: 14.02.2013 US 201313767252
(43) Date of publication of application: 20.08.2014
(73) Proprietor: The Boeing Company, Chicago, IL 60606-1596 (US)
(72) Inventor: Crooks, Tab Hunter, Dana Point, CA 92629 (US); Galasso, D. Anthony, Trabuco Canyon, CA 92679 (US); Magnuson, Jon Allan, Corona del Mar, CA 92625 (US)
(74) Representative: Boult Wade Tennant LLP

(56) References cited:
- EP-A2- 1 964 601
- WO-A1-2013/010328
- WO-A2-2009/126607
- US-A- 3 359 707
- US-A- 4 094 652
- US-A- 4 322 394
- US-A1- 2001 009 124
- US-A1- 2005 121 393
- US-A1- 2012 048 111
- US-B1- 6 621 848

## Description

### FIELD

This application is directed to carbon dioxide collection and, more particularly, to the use of dielectric heating to recover collected carbon dioxide from an adsorbent material.

### BACKGROUND

Certain molecules, such as carbon dioxide or water, may be targeted and collected from gas streams for a variety of applications. For example, carbon dioxide may be collected as a byproduct of industrial processes and to remove excess carbon dioxide from a supply of air.

Carbon dioxide may be obtained from various sources using various techniques. Traditional carbon dioxide collection techniques may be very energy intensive, particularly when run on an industrial scale. The two most demanding energy requirements for carbon dioxide collection are typically the energy required to drive a gas stream past or through a collecting medium and the energy required to regenerate and capture the carbon dioxide from the collecting medium. Therefore, carbon dioxide material costs may become significant, particularly when large quantities are used.

One method for collecting carbon dioxide employs a molecular sieve to adsorb the carbon dioxide molecules. Removal of the adsorbed carbon dioxide requires a significant amount of energy. Such energy is usually supplied by radiant heating and/or by pulling the molecules off using a high vacuum.

However, heating the system requires significant energy and, therefore, is inefficient. It also requires the structural components of the system be designed such that all the component parts can rapidly and efficiently radiate heat evenly throughout the system. This usually requires a metallic system, a plurality of radiant heaters, and a supply of electrical power. Additionally, since most molecular sieves are made from ceramic materials, which are normal insulators, they do not conduct heat easily and must be designed in close proximity to multiple heat sources.

Further, since molecular sieves are also porous materials that have polar charges, they also have an affinity to hold other charged molecules. This can make the molecular sieve less likely to release charged molecules, such as water. Therefore, certain target molecules may require even higher temperatures to be released, thus requiring more energy.

An additional energy source, such as a high vacuum, may also be required to effectively release the molecules. Utilization of a vacuum adds additional costs to the system by requiring additional energy for operation and additional structural components. The molecular sieve must be housed in a chamber that is capable of withstanding lower pressures, thus the chamber must be reinforced and vacuum valves and seals must be added.

Known carbon dioxide collection systems commonly operate by passing a gas stream through a collection bed to adsorb the carbon dioxide from the gas stream. The carbon dioxide would then have to be recovered, or desorbed, from the collection bed by heat, vacuum, or a combination of the two. This would have to be accomplished within a chamber that is capable of sustaining a vacuum. Thus a thick, heavy walled chamber, usually made of metal, that is capable of withstanding thermal exposure and high vacuum without distortion is required. After a period of time, the adsorbed carbon dioxide is released into the chamber. The time period required is dependent on various factors, such as on the gas adsorbed and the conditions used to release the molecules. For example, the higher the temperature the faster the time, but more energy input is required at a higher operational cost. As another example, the lower the vacuum the faster the time, but more energy input is required at a higher operational cost and at a higher cost for the vacuum chamber and associated vacuum components.

In US 3,359,707 there is described a process and apparatus for purifying stale air such as that occurring in unventilated places, especially underground shelters and submarines, and in general for eliminating gases and vapours from a confined atmosphere.

US 2012/0048111, in accordance with its abstract, states "In a method of capturing carbon dioxide in a gas, carbon dioxide in a gas is adsorbed to the hybrid adsorbent prepared by mixing an adsorbent with iron oxide nanoparticles, micro-waves are irradiated to the hybrid adsorbent and the carbon dioxide adsorbed to the hybrid adsorbent is desorbed from the hybrid adsorbent, and the carbon dioxide desorbed from the hybrid adsorbent is captured."

EP 1,964,601, in accordance with its abstract, states "A carbon dioxide removal system includes a first sorbent bed and a second sorbent bed. Each of the first and second sorbent beds has a molecular sieve sorbent for adsorbing or desorbing CO₂. One of the sorbent beds adsorbs CO₂ and the other of the sorbent beds desorbs CO₂ at any one time. The first and second sorbent beds are thermally connected to transfer heat between the sorbent beds."

WO 2009/126607, in accordance with its abstract, states "Disclosed herein is a method and system for separating carbon dioxide (CO₂) from a CO₂ containing gas stream containing water vapor and additional impurities, for example, nitrogen, oxygen, sulfur oxides, nitrogen oxides, and mercury. The CO₂ is captured by subjecting the CO₂ gas feed stream to a temperature swing adsorption step. The temperature swing adsorption step comprises an adsorption step for producing a substantially dry carbon dioxide-depleted stream, and an adsorbent regeneration step comprising heating the adsorbent bed to produce a substantially water vapor-free carbon dioxide stream. Moisture from the gas stream containing CO₂ is optionally removed by pressure swing adsorption, temperature swing adsorption, membrane separation, or absorption prior to CO₂ capture."

US 2001/0009124, in accordance with its abstract, states "A decarbonating apparatus has a dehumidifying section for adsorbing humidity contained in waste gas and a decarbonating section for adsorbing CO, contained in the dehumidified waste gas. The decarbonating section includes a decarbonating drum rotor loaded with a CO, adsorbent having a honeycomb structure and arranged so as to adsorb CO, contained in the waste gas, a heated gas supply pipe for supplying a heated gas so as to desorb CO, adsorbed by the CO, adsorbent, a purge gas supply pipe for supplying a purge gas so as to purge desorbed CO,, and a cooling gas supply pipe for supplying a cooling gas so as to regenerate the CO, adsorbent. The decarbonating drum rotor is rotated to successively pass through the adsorption region, the desorption region, the purging region, and the regeneration region."

According, those skilled in the art continue with research and development efforts in the field of carbon dioxide collection.

### SUMMARY

There is described herein a system for collecting carbon dioxide from a process gas, the system comprising: a gas source configured to be a source of the process gas; a condenser configured to receive the process gas, to condense water vapour in the process gas by cooling the process gas and to output a partially dry gas; a desiccant chamber configured to receive the partially dry gas from the condenser and to output a substantially dry gas, wherein the desiccant chamber comprises a desiccant material configured to remove substantially all of the water vapour remaining in the partially dry gas, a first closed vessel defining a first hollow internal volume enclosing the desiccant material, and a first dielectric heater configured to direct electromagnetic radiation to water adsorbed onto the desiccant material to heat the adsorbed water and promote the release of the adsorbed water from the desiccant material; and a contact chamber configured to receive the substantially dry gas from the desiccant chamber and output a substantially carbon dioxide-free dry gas, wherein the contact chamber comprises: an adsorbent material configured to adsorb substantially all the carbon dioxide from the dry gas, a second closed vessel defining a second hollow internal volume for enclosing the adsorbent material, and a second dielectric heater configured to direct electromagnetic radiation to the carbon dioxide adsorbed onto the adsorbent material to heat the adsorbed carbon dioxide and promote the release of carbon dioxide molecules from the adsorbent material.

### BRIEF DESCRIPTION OF THE DRAWINGS

Fig. 1 is a schematic block diagram of an embodiment of the disclosed system for collecting carbon dioxide;
Fig. 2 is a schematic block diagram of an embodiment of the disclosed desiccant chamber;
Fig. 3 is a schematic block diagram of an embodiment of the disclosed contact chamber;
Fig. 4 is a flow chart illustrating an embodiment of the disclosed method for collecting carbon dioxide; and,
Fig. 5 is a flow chart illustrating an embodiment of the disclosed method for desorbing carbon dioxide collected on an adsorbing material.

### DETAILED DESCRIPTION

The following detailed description refers to the accompanying drawings, which illustrate specific embodiments of the disclosure. Other embodiments having different structures and operations do not depart from the scope of the present disclosure. Like reference numerals may refer to the same element or component in the different drawings.

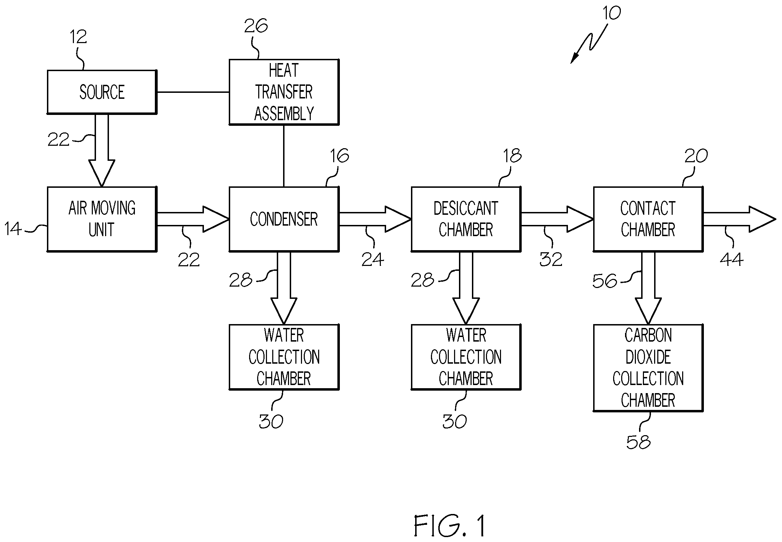

Referring to Fig. 1, one embodiment of the disclosed system for collecting carbon dioxide, generally designated 10, includes a gas source 12 and a contact chamber 20. The system 10 includes, a condenser 16, a desiccant chamber 18 and, optionally, an air moving unit 14. Additional subsystems may be incorporated into the system 10 without departing from the scope of the present disclosure.

The system 10 may drive a stream of process gas 22 through a series of controlled environments until at least a portion of target molecules is collected from the process gas 22 and released. As further described herein, examples of target molecules that may be collected by the system 10 include water vapor and carbon dioxide.

The gas source 12 is a source of the process gas 22. The process gas 22 may be any gas having one or more target molecules. In this embodiment, the process gas is a carbon dioxide- and water vapor-containing gas. For example, the process gas 22 may be a gaseous mixture including carbon dioxide and water vapor, and may include other constituents such as nitrogen, oxygen, other rare gases, and the like.

In one implementation, the gas source 12 may be a power plant and the process gas 22 may be the effluent from the power plant. For example, the power plant may be a hydrocarbon-burning power plant, such as a natural gas power plant, and the process gas 22 may be the combustion byproducts of the hydrocarbon-burning power plant. Therefore, the process gas 22 may be at a relatively high temperature relative to ambient conditions, and may include significant quantities of carbon dioxide as a result of the combustion reaction of oxygen with the hydrocarbon. As an example, the process gas 22 may have a water vapor to carbon dioxide ratio equal to or less than one (1) by weight.

The process gas 22 may be at an elevated temperature relative to ambient conditions such that the process gas 22 contains excess heat. In one expression, the process gas 22 may be at a temperature of at least 25 °C. In another expression, the process gas 22 may be at a temperature of at least 50 °C. In another expression, the process gas 22 may be at a temperature of at least 100 °C. In another expression, the process gas 22 may be at a temperature of at least 200 °C. In another expression, the process gas 22 may be at a temperature of at least 300 °C. In another expression, the process gas 22 may be at a temperature of at least 400 °C. In yet another expression, the process gas 22 may be at a temperature of at least 500 °C.

In another implementation, the gas source 12 may be cold, dry ambient air. In one expression, the process gas 22 may be at a temperature of at least 5 °C. In another expression, the process gas 22 may be at a temperature of at least 10 °C. In another expression, the process gas 22 may be at a temperature of at least 20 °C.

The air moving unit 14, while optional, may facilitate the transfer of the process gas 22 from the gas source 12 through the system 10. The air moving unit 14 may be a fan, a blower or the like, and may control the flow (e.g., the flow rate) of the process gas 22 to the condenser 16. The use of multiple air moving units 14 is also contemplated.

Optionally, separating devices (not shown), such a scrubbers, may be used between the gas source 12 and the condenser 16 to remove contaminants (e.g., metals) from the effluent before the process gas 22 enters the system 10.

The condenser 16 receives the process gas 22 and condenses the water vapor in the process gas 22 to output a partially (if not fully) dry gas 24. Various condenser types and configurations may be used, and use of a single stage or multi-stage condenser 16 is also contemplated.

The condenser 16 condenses the water vapor in the process gas 22 by cooling the process gas 22. Optionally, the heat extracted from the process gas 22 by the condenser 16 during cooling may be transferred to a heat transfer assembly 26 for further thermal use.

Thus, the condenser 16 lowers the temperature of the process gas 22. In one expression, the condenser 16 may lower the temperature of the process gas 22 by at least 10 °C. In another expression, the condenser 16 may lower the temperature of the process gas 22 by at least 20 °C. In another expression, the condenser 16 may lower the temperature of the process gas 22 by at least 30 °C. In another expression, the condenser 16 may lower the temperature of the process gas 22 by at least 40 °C. In another expression, the condenser 16 may lower the temperature of the process gas 22 by at least 50 °C. In another expression, the condenser 16 may lower the temperature of the process gas 22 by at least 100 °C. In another expression, the condenser 16 may lower the temperature of the process gas 22 by at least 150 °C. In yet another expression, the condenser 16 may lower the temperature of the process gas 22 by at least 200 °C.

Optionally, any water 28 removed from the process gas 22 by the condenser 16 may be collected as a byproduct of the system 10. The water 28 may be collected in a water collection chamber 30 and may then be reused for any suitable purpose. Alternatively, the water 28 may be discharged to a drain.

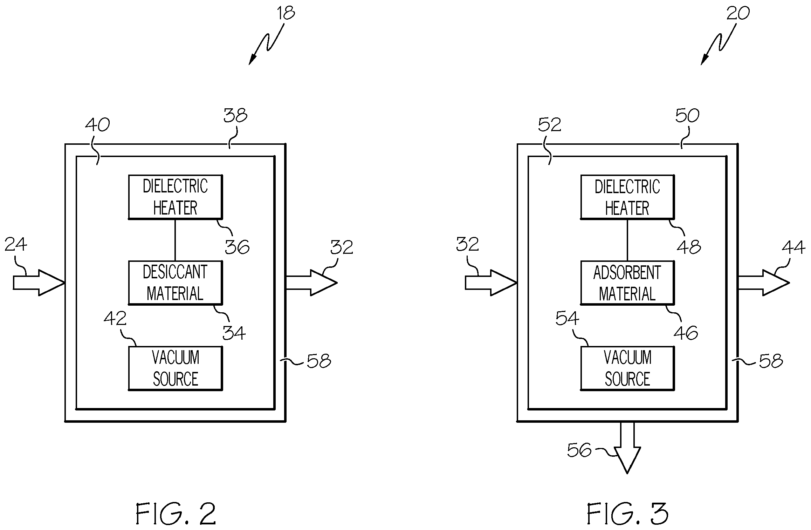

Referring to Fig. 2, the desiccant chamber 18 receives the partially dry gas 24 from the condenser 16, and outputs a substantially dry gas 32. The desiccant chamber 18 includes a desiccant material 34 selected to remove substantially all of the water remaining in the partially dry gas 24, at least one dielectric heater 36, and a closed vessel 38 defining a hollow internal volume 40 for enclosing the desiccant material 34 and, optionally, the dielectric heater 36.

Various desiccant materials 34 may be used in the desiccant chamber 18 to primarily target water molecules without departing from the scope of the present disclosure. In one particular implementation, the desiccant material 34 may be (or may include) an adsorbent material, such as a molecular sieve material. As one example, the desiccant material 34 may be (or may include) a porous ceramic material. As another example, the desiccant material 34 may be (or may include) a molecular sieve material with an alkali metal alumino-silicate structure, which may have an effective pore opening size of about 2 to about 5 angstroms (e.g., 3 angstroms). As yet another example, the desiccant material 34 may be (or may include) a zeolite material, such as zeolite 3A.

The desiccant material 34 in the desiccant chamber 18 may be structured in various ways. As one example, the desiccant material 34 may be configured as a solid monolithic structure. As another example, the desiccant material 34 may be configured as pellets, powder and/or spherical extrudates in a packed bed.

The desiccant material 34 may become exhausted after collecting a certain quantity of water and, therefore, may require regeneration. When a sufficient amount of water has been adsorbed onto the desiccant material 34, a desorbing process is initiated to release the water from the desiccant material 34. The desorbing process is effected by applying electromagnetic radiation to the desiccant material 34 in order to heat the adsorbed water. The process of desorbing the adsorbed water from the desiccant material 34 regenerates the desiccant material 34, thereby allowing further use of the desiccant material 34.

The adsorbed water is released from the desiccant material 34, within the desiccant chamber 18, in response to the dielectric heating. When subjecting the desiccant material 34 to dielectric heat, electromagnetic radiation is directed to the water adsorbed onto the desiccant material 34 by the dielectric heater 36 to heat the adsorbed water and promote the release of the water from the desiccant material 34. Other techniques, such as applying a low vacuum, may also be used to promote the release of the adsorbed water and regenerate the desiccant material 36. For example, an optional vacuum source 42 may be utilized to draw a vacuum within the internal volume 40 of the vessel 38. Combinations of desorption techniques, such as dielectric heat and vacuum, are contemplated.

Any water 28 (Fig. 1) removed from the partially dry gas 24 at the desiccant chamber 18 may be collected in the water collection chamber 30 (Fig. 1).

Thus, the condenser 16 and the desiccant chamber 18 remove substantially all of the water originally contained in the process gas 22. The resulting dry gas 32 is then used for carbon dioxide collection. Use of the condenser 16 and the desiccant chamber 18 is beneficial is in the cost effectiveness of carbon dioxide collection where the ratio of water vapor to carbon dioxide in the dry gas 30 is equal or less than one by weight.

Referring to Fig. 3, the contact chamber 20 receives the dry gas 32, from the desiccant chamber 18, and outputs a substantially carbon dioxide-free dry gas 44. The contact chamber 20 includes an adsorbent material 46 selected to adsorb substantially all the carbon dioxide from the dry gas 32, at least one dielectric heater 48, and a closed vessel 50 defining a hollow internal volume 52 for enclosing the adsorbent material 46 and, optionally, the dielectric heater 48. The adsorbent material 46 adsorbs carbon dioxide from the dry gas 32.

A variety of adsorbent materials 46 may be suitable for use in the contact chamber 20 to primarily target carbon dioxide molecules from the dry gas 32. As one example, the adsorbent material 46 may be (or may include) a molecular sieve material. As another example, the adsorbent material 46 may be (or may include) a porous ceramic material. As another example, the adsorbent material 46 may be (or may include) a molecular sieve material with an alkali metal alumino-silicate structure, which may have an effective pore opening size of about 8 to about 13 angstroms (e.g., 10 angstroms). As yet another example, the adsorbent material 46 may be (or may include) a zeolite material, such as zeolite 13X.

The adsorbent material 46 in the contact chamber 20 may be structured in various ways. As one example, the adsorbent material 46 may be configured as a solid monolithic structure. As another example, the adsorbent material 46 may be configured as pellets, powder and/or spherical extrudates in a packed bed.

The adsorbent material 46 may become exhausted after collecting a certain quantity of carbon dioxide and, therefore, may require regeneration. When a sufficient amount of carbon dioxide has been adsorbed onto the adsorbent material 46, a desorbing process is initiated to release the carbon dioxide from the adsorbent material 46. The desorbing process is effected by applying electromagnetic radiation to the adsorbent material 46 in order to heat to the adsorbed carbon dioxide. The process of desorbing the adsorbed carbon dioxide from the adsorbent material 46 regenerates the adsorbent material 46, thereby allowing further use of the adsorbent material 46.

The adsorbed carbon dioxide is released from the adsorbent material 46, within the contact chamber 20, by way of the dielectric heater 48. When subjecting the adsorbent material 46 to dielectric heat, electromagnetic radiation is directed to the carbon dioxide adsorbed onto the adsorbent material 46 by the dielectric heater 48 to heat the adsorbed carbon dioxide and promote the release of the carbon dioxide molecules from the adsorbent material 46. Other techniques, such as applying a vacuum, may also be used to release the captured carbon dioxide and regenerate the adsorbent material 48.

For example, a vacuum source 54 may be utilized to draw a low vacuum within the internal volume 52 of the vessel 50. The contact chamber 20 may be substantially sealed to the flow of gas, and a vacuum may be drawn in the contact chamber 20 by way of the vacuum source 54. Therefore, the applied vacuum may facilitate the process of desorbing carbon dioxide from the adsorbent material 48. Combinations of techniques, such as dielectric heat and vacuum, are contemplated.

Thus, the contact chamber 20 removes a majority (if not substantially all) of the carbon dioxide originally contained in the process gas 22. Optionally, the gaseous carbon dioxide 56 removed by the contact chamber 20 may be released and collected in the carbon dioxide collection chamber 58 (Fig. 1). The vacuum source 54 may also assist in the collection of the gaseous carbon dioxide 56 in the carbon dioxide collection chamber 58. The collected gaseous carbon dioxide 56 and resulting carbon dioxide free gas 44 may then be sent for storage or for transport to a job site.

The gaseous carbon dioxide 56 may be transitioned to a solid using any suitable technique. For example, a cooled surface, such as a cold finger, may be positioned downstream of the contact chamber 20 to make contact with the gaseous carbon dioxide 56. The cooled surface may be cooled by a cryogenic pump that circulates a cold liquid through the cooled surface. The cooled surface may be cooled to a temperature that is sufficiently low to cause the gaseous carbon dioxide 56 to solidify on the cooled surface. Other techniques for solidifying the carbon dioxide are also contemplated. The solidified carbon dioxide may be extracted using any suitable method of collection. For example, the solidified carbon dioxide may be collected, either as a solid or by transitioning the carbon dioxide back to a gas (e.g., with heat).

The dielectric heaters 36, 48 may provide a high-frequency alternating field, radio wave, or microwave electromagnetic radiation to heat the adsorbed target molecules (e.g., water; carbon dioxide). The adsorbed target molecules may be polarized by an applied electrical field produced by the dielectric heaters 36, 48. The heating may be caused by molecular dipole rotation within the adsorbed target molecules.

The molecular rotation may occur in the adsorbed target molecules when the polar molecules align themselves with the electromagnetic field produced by the dielectric heater 36, 48. When the electromagnetic field is oscillating, the polar molecules rotate, thereby continuously aligning themselves with the electromagnetic field (i.e., dipole rotation). As the electromagnetic field alternates, the molecules reverse direction. Rotating molecules push, pull, and collide with other molecules distributing the energy to adjacent molecules, thereby producing energy that appears as heat.

For example, the dielectric heaters 36, 48 may include a high voltage power source (e.g., a transformer or an electronic power converter), which passes energy to a cavity magnetron. A high voltage capacitor may be connected to the magnetron and the power source. The magnetron may convert high-voltage electric energy to electromagnetic energy (e.g., microwave radiation). A control circuit (e.g., a microcontroller) may be used to control the magnetron. An emitter may be used to direct the electromagnetic energy toward the desiccant material 34 and/or the adsorbent material 46. A waveguide may also be used to control the direction of the electromagnetic energy targeting the desiccant material 34 and/or the adsorbent material 46. The closed vessels 38, 50 of the desiccant chamber 18 and contact chamber 20, respectively may act as a heating chamber. An interior surface of the vessel walls 58 (Figs. 2 and 3) may be lined with metal to reflect the electromagnetic energy.

In one implementation the dielectric heater 36, 48 may produce electromagnetic waves having electric fields of high frequency and short wavelengths (e.g., microwaves). For example, the electromagnetic waves may be 2.45 gigahertz (GHz) with a wavelength of 122 millimeters. In another example, the electromagnetic waves may be 915 megahertz (MHz) with a wavelength of 328 millimeters. The microwaves may be launched at the desiccant material 34 and/or the adsorbent material 46 from a small emitter and conveyed through the internal volume 40, 52 of the vessel 38, 50 to the desiccant material 34 and adsorbent material 46, respectively.

The dielectric heaters 36, 48 may be operated at a minimum power level and time increment in order to release the adsorbed water and carbon dioxide from the desiccant material 34 and adsorbent material 46, respectively, with a minimal heating and under a minimal vacuum. By using the dielectric heaters 36, 48 the water molecules and/or the carbon dioxide molecules may be energized to a sufficient state such that they are released quickly from the desiccant material 34 and adsorbent material 46, respectively. By controlling the power and timing of the dielectric heater 36, 48, the amount of energy required to effect necessary heating can be minimized, thereby leading to a direct reduction in operating costs.

In an example of the system 10, water may be released from the desiccant material in approximately 3.5 minutes at -2 pounds per square inch gauge (psig) (-14kPa relative to atmosphere). In another example of the system 10, carbon dioxide may be released from the adsorbent material in approximately 1.5 minutes at atmospheric pressure.

Furthermore, the use of dielectric heating at low vacuum pressure or atmospheric pressure also reduces material costs of the system 10, particularly of the walls 58 (Figs. 2 and 3) of the vessels 38, 50 of the desiccant chamber 18 and contact chamber 20, respectively. The vessel walls 58 may be constructed of an inexpensive, polymer-based thin material.

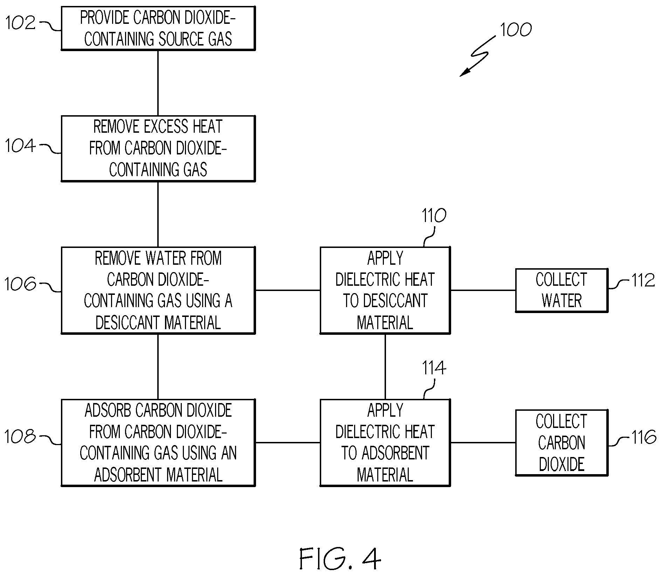

Fig. 4 illustrates a method 100 for collecting carbon dioxide. The method 100 begins at block 102 with the step of providing a carbon dioxide-containing process gas. As described above, the carbon dioxide-containing process gas may be the hot effluent from a power plant, such as a hydrocarbon-burning power plant. Use of other carbon dioxide-containing process gases is also contemplated.

As shown at block 104, excess heat and water is removed from the carbon dioxide-containing process gas. The excess heat is removed using a condenser, as described above, which may also beneficially remove some (if not all) of the water vapor from the carbon dioxide-containing process gas.

As shown at block 106, water is removed from the carbon dioxide-containing process gas. The step of removing water is performed using a desiccant material to adsorb water, as described above.

As shown at block 110, the adsorbed water is desorbed from the desiccant material by dielectric heating. Optionally, a vacuum may also be applied to promote desorption of water from the desiccant material. Then, as shown in block 112, the released water may be collected or discharged to a drain.

As shown at block 108, carbon dioxide is removed from the carbon dioxide-containing process gas. The step of removing carbon dioxide is performed using an adsorbent material, as described above.

As shown at block 114, the adsorbed carbon dioxide is desorbed from the adsorbent material by dielectric heating. Optionally, a vacuum may also be applied to promote desorption of carbon dioxide from the adsorbent material. Then, as shown in block 116, the desorbed carbon dioxide may be collected.

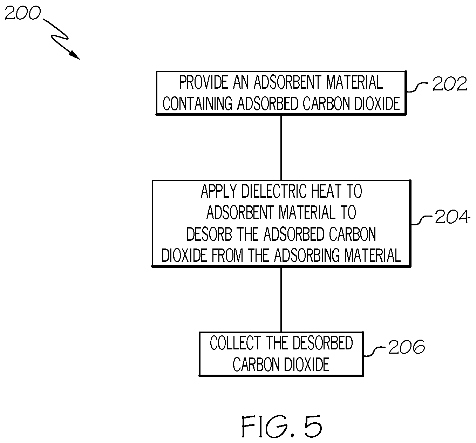

Fig. 5 illustrates a method 200 for desorbing carbon dioxide collected on an adsorbent material. The method 200 begins at block 202 with the step of providing an adsorbent material comprising an amount of adsorbed carbon dioxide. As shown at block 204, dielectric heat is applied to the adsorbent material, by a dielectric heater, to desorb carbon dioxide from the adsorbent material. Optionally, a vacuum may also be applied to promote desorption of carbon dioxide from the adsorbent material. As shown at block 206, the desorbed carbon dioxide may be collected.

Accordingly, the disclosed systems and methods use dielectric heating to quickly and efficiently release adsorbed target molecules, namely water and carbon dioxide, faster than traditional methods and with less expensive energy requirements and structural materials due to the lack of necessity for high temperatures or vacuums.

Although various embodiments of the claimed system and example methods for collecting target molecules have been shown and described, further modifications may occur to those skilled in the art upon reading the specification.

## Claims

1. A system (10) for collecting carbon dioxide from a process gas (22), the system (10) comprising:
a gas source (12) configured to be a source of the process gas (22);
a condenser (16) configured to receive the process gas (22), to condense water vapour in the process gas (22) by cooling the process gas (22) and to output a partially dry gas (24);
a desiccant chamber (18) configured to receive the partially dry gas (24) from the condenser (16) and to output a substantially dry gas (32), wherein the desiccant chamber (18) comprises:
a desiccant material (34) configured to remove substantially all of the water vapour remaining in the partially dry gas (24),
a first closed vessel (38) defining a first hollow internal volume (40) enclosing the desiccant material (34), and
a first dielectric heater (36) configured to direct electromagnetic radiation to water adsorbed onto the desiccant material (34) to heat the adsorbed water and promote the release of the adsorbed water from the desiccant material (34); and,
a contact chamber (20) configured to receive the substantially dry gas (32) from the desiccant chamber (18) and output a substantially carbon dioxide-free dry gas (44), wherein the contact chamber (20) comprises:
an adsorbent material (46) configured to adsorb substantially all the carbon dioxide from the substantially dry gas (32),
a second closed vessel (50) defining a second hollow internal volume (52) for enclosing the adsorbent material (46), and
a second dielectric heater (48) configured to direct electromagnetic radiation to the carbon dioxide adsorbed onto the adsorbent material (46) to heat the adsorbed carbon dioxide and promote the release of carbon dioxide molecules from the adsorbent material (46).

2. The system (10) of Claim 1 wherein the gas source (12) is a power plant and the process gas (22) is effluent from the power plant.

3. The system (10) of Claim 1 wherein any water (28) removed from the process gas (22) by the condenser (16) is collected in a water collection chamber (30).

4. The system (10) of Claim 1 wherein the first hollow internal volume (40) encloses the first dielectric heater (36).

5. The system (10) of Claim 1 wherein the desiccant material (34) comprises a zeolite material.

6. The system (10) of Claim 5 wherein the desiccant material (34) comprises zeolite 3A.

7. The system (10) of Claim 5 wherein the desiccant material (34) is configured as a solid monolithic structure.

8. The system (10) of Claim 1 wherein any water (28) removed from the partially dry gas (24) at the desiccant chamber (18) is collected in a water collection chamber (30).

9. The system (10) of Claim 1 wherein the second hollow internal volume (52) encloses the second dielectric heater (48).

10. The system (10) of Claim 1 wherein the adsorbent material (46) comprises a zeolite material.

11. The system (10) of Claim 10 wherein the adsorbent material (46) comprises zeolite 13X.

12. The system (10) of Claim 1 wherein the adsorbent material (46) is configured as a solid monolithic structure.

13. The system (10) of Claim 1 wherein the first dielectric heater (36) is configured to provide microwave electromagnetic radiation to heat the water, and the second dielectric heater (48) is configured to provide microwave electromagnetic radiation to heat the carbon dioxide.

14. The system (10) of Claim 1 further comprising a first vacuum source (42) configured to draw a vacuum within the first internal volume (40) thereby to promote the release of the adsorbed water and regenerate the desiccant material (34).

15. The system (10) of Claim 1 further comprising a second vacuum source (54) configured to draw a vacuum within the second internal volume (52) thereby to facilitate the process of desorbing carbon dioxide from the adsorbent material (48).

## Patentansprüche

1. System (10) zum Sammeln von Kohlendioxid aus einem Prozessgas (22), wobei das System (10) umfasst:
eine Gasquelle (12), die konfiguriert ist, um eine Quelle für das Prozessgas (22) zu sein;
einen Kondensator (16), der konfiguriert ist, um das Prozessgas (22) zu empfangen, um Wasserdampf in dem Prozessgas (22) durch Kühlen des Prozessgases (22) zu kondensieren und um ein teilgetrocknetes Gas (24) auszugeben;
eine Trockenmittelkammer (18), die konfiguriert ist, um das teilgetrocknete Gas (24) von dem Kondensator (16) zu empfangen und ein im Wesentlichen trockenes Gas (32) auszugeben, wobei die Trockenmittelkammer (18) umfasst:
ein Trockenmittel (34), das konfiguriert ist, um im Wesentlichen den gesamten in dem teilgetrockneten Gas (24) verbliebenen Wasserdampf zu entfernen,
einen ersten geschlossenen Behälter (38), der ein erstes hohles Innenvolumen (40) definiert, das das Trockenmittel (34) umschließt, und
ein erstes dielektrisches Heizelement (36), das konfiguriert ist, um elektromagnetische Strahlung auf an dem Trockenmittel (34) adsorbiertes Wasser zu richten, um das adsorbierte Wasser zu erhitzen und die Freisetzung des adsorbierten Wassers von dem Trockenmittel (34) zu fördern; und
eine Kontaktkammer (20), die konfiguriert ist, um das im Wesentlichen trockene Gas (32) aus der Trockenmittelkammer (18) zu empfangen und ein im Wesentlichen kohlendioxidfreies trockenes Gas (44) auszugeben, wobei die Kontaktkammer (20) umfasst:
ein Adsorptionsmittel (46), das konfiguriert ist, um im Wesentlichen das gesamte Kohlendioxid aus dem im Wesentlichen trockenen Gas (32) zu adsorbieren,
einen zweiten geschlossenen Behälter (50), der ein zweites hohles Innenvolumen (52) zum Umschließen des Adsorptionsmittels (46) definiert, und
ein zweites dielektrisches Heizelement (48), das konfiguriert ist, um elektromagnetische Strahlung auf das auf dem Adsorptionsmittel (46) adsorbierte Kohlendioxid zu richten, um das adsorbierte Kohlendioxid zu erhitzen und die Freisetzung von Kohlendioxidmolekülen aus dem Adsorptionsmittel (46) zu fördern.

2. System (10) nach Anspruch 1, bei dem die Gasquelle (12) ein Kraftwerk ist und das Prozessgas (22) ein Abgas aus dem Kraftwerk ist.

3. System (10) nach Anspruch 1, bei dem alles durch den Kondensator (16) aus dem Prozessgas (22) entfernte Wasser (28) in einer Wassersammelkammer (30) gesammelt wird.

4. System (10) nach Anspruch 1, bei dem das erste hohle Innenvolumen (40) das erste dielektrische Heizelement (36) umschließt.

5. System (10) nach Anspruch 1, bei dem das Trockenmittel (34) ein Zeolithmaterial umfasst.

6. System (10) nach Anspruch 5, bei dem das Trockenmittel (34) Zeolith 3A umfasst.

7. System (10) nach Anspruch 5, bei dem das Trockenmittel (34) als feste monolithische Struktur konfiguriert ist.

8. System (10) nach Anspruch 1, bei dem alles aus dem teilgetrockneten Gas (24) in der Trockenmittelkammer (18) entfernte Wasser (28) in einer Wassersammelkammer (30) gesammelt wird.

9. System (10) nach Anspruch 1, bei dem das zweite hohle Innenvolumen (52) das zweite dielektrische Heizelement (48) umschließt.

10. System (10) nach Anspruch 1, bei dem das Adsorptionsmittel (46) ein Zeolithmaterial umfasst.

11. System (10) nach Anspruch 10, bei dem das Adsorptionsmittel (46) Zeolith 13X umfasst.

12. System (10) nach Anspruch 1, bei dem das Adsorptionsmaterial (46) als feste monolithische Struktur konfiguriert ist.

13. System (10) nach Anspruch 1, bei dem das erste dielektrische Heizelement (36) konfiguriert ist, um elektromagnetische Mikrowellenstrahlung zum Erhitzen des Wassers bereitzustellen, und das zweite dielektrische Heizelement (48) konfiguriert ist, um elektromagnetische Mikrowellenstrahlung zum Erhitzen des Kohlendioxids bereitzustellen.

14. System (10) nach Anspruch 1, das ferner eine erste Unterdruckquelle (42) umfasst, die konfiguriert ist, um einen Unterdruck in dem ersten Innenvolumen (40) zu erzeugen, um dadurch die Freisetzung des adsorbierten Wassers zu fördern und das Trockenmittelmaterial (34) zu regenerieren.

15. System (10) nach Anspruch 1, das ferner eine zweite Unterdruckquelle (54) umfasst, die konfiguriert ist, um einen Unterdruck in dem zweiten Innenvolumen (52) zu erzeugen, um dadurch den Prozess des Desorbierens von Kohlendioxid aus dem Adsorptionsmaterial (48) zu erleichtern.

## Revendications

1. Système (10) pour collecter du dioxyde de carbone à partir d'un gaz de traitement (22), le système (10) comprenant :
une source de gaz (12) configurée pour être une source du gaz de traitement (22) ;
un condenseur (16) configuré pour recevoir le gaz de traitement (22), pour condenser de la vapeur d'eau dans le gaz de traitement (22) en refroidissant le gaz de traitement (22) et pour délivrer en sortie un gaz partiellement sec (24) ;
une chambre de dessiccation (18) configurée pour recevoir le gaz partiellement sec (24) provenant du condenseur (16) et pour délivrer en sortie un gaz sensiblement sec (32), dans lequel la chambre de dessiccation (18) comprend :
un matériau de dessiccation (34) configuré pour retirer sensiblement toute la vapeur d'eau restant dans le gaz partiellement sec (24),
un premier récipient fermé (38) définissant un premier volume interne creux (40) renfermant le matériau de dessiccation (34), et
un premier élément chauffant diélectrique (36) configuré pour diriger un rayonnement électromagnétique vers de l'eau adsorbée sur le matériau de dessiccation (34) pour chauffer l'eau adsorbée et favoriser la libération de l'eau adsorbée à partir du matériau de dessiccation (34) ; et,
une chambre de contact (20) configurée pour recevoir le gaz sensiblement sec (32) provenant de la chambre de dessiccation (18) et délivrer en sortie un gaz sec sensiblement exempt de dioxyde de carbone (44), dans lequel la chambre de contact (20) comprend :
un matériau adsorbant (46) configuré pour adsorber sensiblement tout le dioxyde de carbone à partir du gaz sensiblement sec (32),
un second récipient fermé (50) définissant un second volume interne creux (52) pour renfermer le matériau adsorbant (46), et
un second élément chauffant diélectrique (48) configuré pour diriger un rayonnement électromagnétique sur le dioxyde de carbone adsorbé sur le matériau adsorbant (46) pour chauffer le dioxyde de carbone adsorbé et favoriser la libération de molécules de dioxyde de carbone à partir du matériau adsorbant (46).

2. Système (10) selon la revendication 1, dans lequel la source de gaz (12) est une centrale électrique et le gaz de traitement (22) est un effluent provenant de la centrale électrique.

3. Système (10) selon la revendication 1, dans lequel toute eau (28) retirée du gaz de traitement (22) par le condenseur (16) est collectée dans une chambre de collecte d'eau (30).

4. Système (10) selon la revendication 1, dans lequel le premier volume interne creux (40) renferme le premier élément chauffant diélectrique (36).

5. Système (10) selon la revendication 1, dans lequel le matériau de dessiccation (34) comprend un matériau zéolite.

6. Système (10) selon la revendication 5, dans lequel le matériau de dessiccation (34) comprend de la zéolithe 3A.

7. Système (10) selon la revendication 5, dans lequel le matériau de dessiccation (34) est configuré sous forme d'une structure monolithique solide.

8. Système (10) selon la revendication 1, dans lequel toute eau (28) retirée du gaz partiellement sec (24) au niveau de la chambre de dessiccation (18) est collectée dans une chambre de collecte d'eau (30).

9. Système (10) selon la revendication 1, dans lequel le second volume interne creux (52) renferme le second élément chauffant diélectrique (48).

10. Système (10) selon la revendication 1, dans lequel le matériau adsorbant (46) comprend un matériau zéolithe.

11. Système (10) selon la revendication 10, dans lequel le matériau adsorbant (46) comprend de la zéolithe 13X.

12. Système (10) selon la revendication 1, dans lequel le matériau adsorbant (46) est configuré sous forme d'une structure monolithique solide.

13. Système (10) selon la revendication 1, dans lequel le premier élément chauffant diélectrique (36) est configuré pour fournir un rayonnement électromagnétique micro-onde pour chauffer l'eau, et le second élément chauffant diélectrique (48) est configuré pour fournir un rayonnement électromagnétique micro-onde pour chauffer le dioxyde de carbone.

14. Système (10) selon la revendication 1, comprenant en outre une première source de vide (42) configurée pour établir par aspiration un vide à l'intérieur du premier volume interne (40) afin de favoriser ainsi la libération de l'eau adsorbée et régénérer le matériau de dessiccation (34).

15. Système (10) selon la revendication 1, comprenant en outre une seconde source de vide (54) configurée pour établir par aspiration un vide à l'intérieur du second volume interne (52) afin de faciliter ainsi le processus de désorption de dioxyde de carbone à partir du matériau adsorbant (48).
